(19) Europäisches Patentamt
European Patent Office
Office européen des brevets

(11) EP 2 319 888 A1

# (12) EUROPEAN PATENT APPLICATION

(43) Date of publication:
**11.05.2011 Bulletin 2011/19**

(51) Int Cl.:
***C08L 83/04*** *(2006.01)*

(21) Application number: **10190410.0**

(22) Date of filing: **09.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.11.2009 JP 2009256116**

(71) Applicant: **NITTO DENKO CORPORATION**
**Osaka 567 (JP)**

(72) Inventor: **Katayama, Hiroyuki**
**Ibaraki-shi Osaka 567-8680 (JP)**

(74) Representative: **Grünecker, Kinkeldey, Stockmair & Schwanhäusser**
**Anwaltssozietät**
**Leopoldstrasse 4**
**80802 München (DE)**

## (54) Composition for thermoplastic silicone resin

(57) The present invention relates to a composition for a thermoplastic silicone resin, the composition including: an alkenyl-containing cage octasilsesquioxane represented by formula (1) in which $R^1$ represents a substituted or unsubstituted alkenyl group, $R^2$ represents a monovalent hydrocarbon group, and all $R^2$ groups may be the same or different; an organohydrogensiloxane; and a hydrosilylation catalyst.

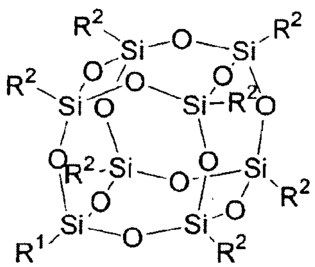

(I)

EP 2 319 888 A1

## Description

## FIELD OF THE INVENTION

The present invention relates to a composition for a thermoplastic silicone resin. More particularly, the invention relates to a composition for a thermoplastic silicone resin which is suitable for use as, for example, a material for forming insulating coating films, a weather-resistant coating material, an insulating molding material, a semiconductor encapsulating material, and an additive for silicone resins, and relates to a thermoplastic silicone resin composition obtained by reacting that composition.

## BACKGROUND OF THE INVENTION

Silicone resins have properties such as high transparency, heat resistance, and flame retardancy and are hence in extensive use as various film-forming materials, encapsulating materials, electrical insulating materials, etc. Of these, thermoplastic silicone resins soluble in organic solvents and having a melting point not lower than ordinary temperature are receiving attention from the standpoints of handling ability and ease of molding. Known examples thereof include a silicone resin in which a cage octasilsesquioxane is bonded to a main chain or a side chain of a polysiloxane.
For example, patent document 1 discloses that a hydrosilylation polymer of octahydridesilsesquioxane and a divinylsiloxane compound has high heat resistance, is soluble in solvents, and melts at 85 to 90°C. Patent document 2 discloses that a dehydrating-condensation polymer of octahydridesilsesquioxane and a disilanol compound is solid at ordinary temperature and is soluble in toluene, methyl isobutyl ketone, and chloroform.
Patent Document 1: JP-A-2000-154252
Patent Document 2: JP-A-2002-69191

## SUMMARY OF THE INVENTION

However, the silicone resins described in patent documents 1 and 2 each are produced using octahydridesilsesquioxane, which is relatively difficult to synthesize, as a starting material. In addition, in the technique disclosed in patent document 1, a GPC column is necessary for purifying the resin obtained. There is hence room for improvement in synthesis.
An object of the invention is to provide a composition for resins that is capable of providing a thermoplastic silicone resin which has excellent heat resistance, is solid at ordinary temperature, and has a melting point not lower than ordinary temperature and which is easy to synthesize and purify.
Namely, the present invention relates to the following items (1) to (3).

(1) A composition for a thermoplastic silicone resin, the composition including:

an alkenyl-containing cage octasilsesquioxane represented by formula (I):

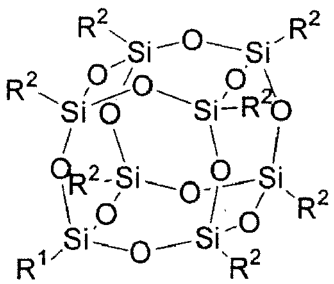

(I)

in which $R^1$ represents a substituted or unsubstituted alkenyl group, $R^2$ represents a monovalent hydrocarbon group, and all $R^2$ groups may be the same or different;
an organohydrogensiloxane; and
a hydrosilylation catalyst.
(2) The composition according to (1), in which the organohydrogensiloxane includes at least one compound selected

from the group consisting of compounds represented by formula (II):

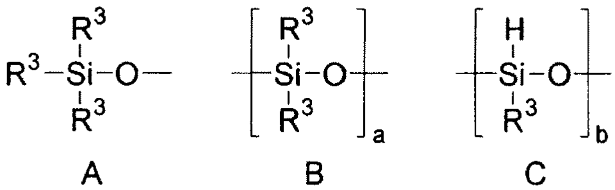

(II)

in which A, B, and C are constitutional units, A represents a terminal unit, B and C each represent a repeating unit, $R^3$ represents a monovalent hydrocarbon group, a represents an integer of 0 or larger, b represents an integer of 2 or larger, and all $R^3$ groups may be the same or different
and compounds represented by formula (III):

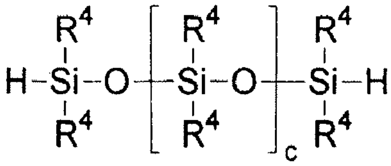

(III)

in which $R^4$ represents a monovalent hydrocarbon group, c represents an integer of 0 or larger, and all $R^4$ groups may be the same or different.
(3) A thermoplastic silicone resin composition obtained by reacting:

an alkenyl-containing cage octasilsesquioxane represented by formula (I):

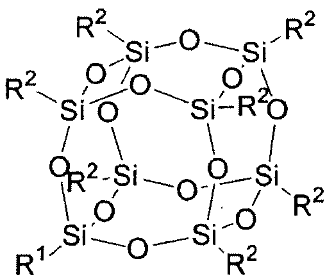

(I)

in which $R^1$ represents a substituted or unsubstituted alkenyl group, $R^2$ represents a monovalent hydrocarbon group, and all $R^2$ groups may be the same or different,
with an organohydrogensiloxane in the presence of a hydrosilylation catalyst.

The composition for a thermoplastic silicone resin of the invention produces an excellent effect that a thermoplastic silicone resin which has excellent heat resistance, is solid at ordinary temperature, and has a melting point not lower than ordinary temperature can be provided.

## DETAILED DESCRIPTION OF THE INVENTION

The composition for a thermoplastic silicone resin of the invention includes (1) a cage octasilsesquioxane, (2) an organohydrogensiloxane, and (3) a hydrosilylation catalyst, and a major feature thereof is that the cage octasilsesquioxane is a compound having a specific structure.

The cage octasilsesquioxane is an octamer of a trifunctional silicone monomer, and various properties can be imparted thereto by changing the remaining substituents bonded to the silicon atoms. In the invention, one of the eight silicon-bonded substituents is an alkenyl group and the remainder includes lowly reactive hydrocarbon groups. This enables the alkenyl group of the octasilsesquioxane to undergo an addition reaction with a hydrosilyl group of the organohydrogensiloxane (hydrosilylation reaction) in the presence of a hydrosilylation catalyst to give a silicone resin having crystallinity imparted thereto. Thus, a resin composition which has excellent heat resistance, is solid at ordinary temperature, and has a melting point not lower than ordinary temperature can be obtained.

(1) Cage Octasilsesquioxane

The cage octasilsesquioxane in the invention is an alkenyl-containing cage octasilsesquioxane represented by formula (I):

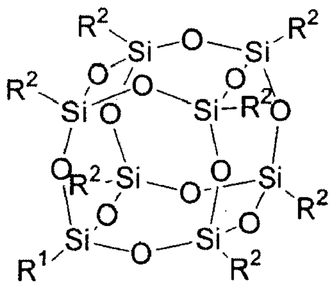

(I)

in which $R^1$ represents a substituted or unsubstituted alkenyl group, $R^2$ represents a monovalent hydrocarbon group, and all $R^2$ groups may be the same or different, from the standpoint of imparting thermoplasticity to the resin composition to be obtained.

$R^1$ in formula (I) represents a substituted or unsubstituted alkenyl group and is an organic group including an alkenyl group as the framework. The number of carbon atoms of the organic group is preferably 1 to 20, more preferably 1 to 10, from the standpoints of ease of preparation and thermal stability. Examples of the organic group include vinyl, allyl, propenyl, butenyl, pentenyl, hexenyl, heptenyl, octenyl, norbornenyl and cyclohexenyl. Of these, vinyl and allyl are preferred from the standpoint of reactivity in the hydrosilylation reaction.

$R^2$ in formula (I) represents a monovalent hydrocarbon group, and examples thereof include saturated or unsaturated hydrocarbon groups which are linear, branched, or cyclic. The number of carbon atoms of the hydrocarbon group is preferably 1 to 20, more preferably 1 to 10, from the standpoints of ease of preparation and thermal stability. Specific examples thereof include methyl, ethyl, propyl, isopropyl, butyl, isobutyl, pentyl, hexyl, phenyl, naphthyl, cyclohexyl and cyclopentyl. Of these, isobutyl and cyclohexyl are preferred from the standpoints of solubility in organic solvents and ease of preparation. Although all $R^2$ groups in formula (I) may be the same or different, it is preferred that the $R^2$ groups should all be isobutyl or cyclohexyl.

Examples of the compound represented by formula (I) include vinylheptaisobutylsilsesquioxane, vinylheptacyclohexylsilsesquioxane, allylheptaisobutylsilsesquioxane, allylheptacyclohexylsilsesquioxane, vinylheptacyclopentylsilsesquioxane and allylheptacyclopentylsilsesquioxane. These may be used alone or in combination of two or more thereof. Preferred of these are: vinylheptaisobutylsilsesquioxane, in which $R^1$ is vinyl and all $R^2$ groups are isobutyl; allylheptaisobutylsilsesquioxane, in which $R^1$ is allyl and all $R^2$ groups are isobutyl; and vinylheptacyclohexylsilsesquioxane, in which $R^1$ is vinyl and all $R^2$ groups are cyclohexyl.

A commercial product of the alkenyl-containing cage octasilsesquioxane may be used. However, use can be made, for example, of one synthesized in one stage from a trisilanol precursor and an alkenyltrichlorosilane according to the method described in J.J. Schwab et al., Applied Organometallic Chemistry, Vol.13, pp.311-327, 1999.

The content of the alkenyl-containing cage octasilsesquioxane is preferably 5 to 99% by weight, more preferably 20 to 95% by weight, even more preferably 50 to 90% by weight, based on the composition.

(2) Organohydrogensiloxane

The organohydrogensiloxane in the invention is not particularly limited. However, it is preferred, from the standpoint of compatibility with each component, that the organohydrogensiloxane is at least one compound selected from

the group consisting of compounds represented by formula (II):
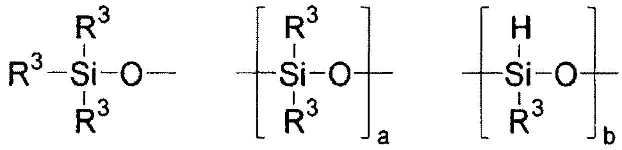

(II)

A B C

in which A, B, and C are constitutional units, A represents a terminal unit, B and C each represent a repeating unit, $R^3$ represents a monovalent hydrocarbon group, a represents an integer of 0 or larger, b represents an integer of 2 or larger, and all $R^3$ groups may be the same or different
and compounds represented by formula (III):
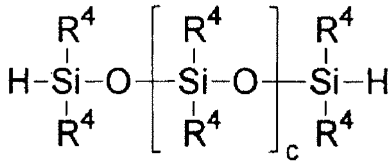

(III)

in which $R^4$ represents a monovalent hydrocarbon group, c represents an integer of 0 or larger, and all $R^4$ groups may be the same or different.

Incidentally, in the present specification, the term "organohydrogensiloxane" is a general term for all compounds ranging from low-molecular compounds to high-molecular compounds and including, for example, organohydrogendisiloxanes and organohydrogenpolysiloxanes.

The compounds represented by formula (II) each are constituted of constitutional units A, B, and C; A is a terminal unit and B and C each are a repeating unit. These are compounds in which hydrogen atoms are contained in the repeating units.

$R^3$ in formula (II) represents a monovalent hydrocarbon group, and examples thereof include saturated or unsaturated hydrocarbon groups which are linear, branched or cyclic. The number of carbon atoms of the hydrocarbon group is preferably 1 to 20, more preferably 1 to 10, from the standpoints of ease of preparation and thermal stability. Specific examples thereof include methyl, ethyl, propyl, butyl, pentyl, hexyl, phenyl, naphthyl, cyclohexyl and cyclopentyl. Of these, methyl is preferred from the standpoint of heat resistance. In formula (II), all $R^3$ groups, i.e., the $R^3$ groups in each constitutional unit A, the $R^3$ groups in each constitutional unit B, and the $R^3$ group in each constitutional unit C, may be the same or different, and these $R^3$ groups each independently represent the hydrocarbon group regardless of constitutional units.

Constitutional units A are terminal units, and two such units are contained in formula (II).

The number of constitutional units B as repeating units, namely, a in formula (II), is an integer of 0 or larger. However, from the standpoint of reactivity, a is an integer of preferably 1 to 1,000, more preferably 1 to 100.

The number of constitutional units C as repeating units, namely, b in formula (II), is an integer of 2 or larger. However, from the standpoint of reactivity, b is an integer of preferably 2 to 10,000, more preferably 2 to 1,000.

The sum of a and b is preferably 2 to 10,000, more preferably 2 to 2,000. The ratio of a to b (a/b) is preferably from 1,000/1 to 1/1,000, more preferably from 100/1 to 1/100.

Examples of the compounds represented by formula (II) include methylhydrogenpolysiloxane, dimethylpolysiloxane-co-methylhydrogensiloxane, ethylhydrogensiloxane and methylhydrogensiloxane-co-methylphenylpolysiloxane. These may be used alone or in combination of two or more thereof. Preferred of these are the compounds in which $R^3$ is methyl, a is an integer of 1 or larger, and b is an integer of 2 or larger.

The compounds represented by formula (II) have a molecular weight of preferably 100 to 1,000,000, more preferably 100 to 100,000, from the standpoints of stability and handing property. In the present specification, the molecular weight of a silicone derivative can be determined through a measurement by gel permeation chromatography (GPC) and a calculation for standard polystyrene.

The compounds represented by formula (III) are compounds having a hydrogen atom at each end.

$R^4$ in formula (III) represents a monovalent hydrocarbon group, and examples thereof include saturated or unsaturated hydrocarbon groups which are linear, branched or cyclic. The number of carbon atoms of the hydrocarbon group is preferably 1 to 20, more preferably 1 to 10, from the standpoints of ease of preparation and thermal stability. Specific examples thereof include methyl, ethyl, propyl, butyl, pentyl, hexyl, phenyl, naphthyl, cyclohexyl and cyclopentyl. Of these, methyl is preferred from the standpoint of heat resistance. In formula (III), all $R^4$ groups may be the same or different. It is, however, preferred that all $R^4$ groups should be methyl.

Although c in formula (III) represents an integer of 0 or larger, c is an integer of preferably 1 to 10,000, more preferably 1 to 1,000, from the standpoint of reactivity.

Examples of the compounds represented by formula (III) include polydimethylsiloxane terminated by hydrosilyl at each end, polymethylphenylsiloxane terminated by hydrosilyl at each end, and polydiphenylsiloxane terminated by hydrosilyl at each end. These may be used alone or in combination of two or more thereof. Preferred of these are the compounds in which all $R^4$ groups are methyl and c is an integer of 1 to 1,000.

The compounds represented by formula (III) have a molecular weight of preferably 100 to 1,000,000, more preferably 100 to 100,000, from the standpoints of safety and handling property.

As compounds represented by formula (II) and formula (III), either commercial products or compounds synthesized by known methods may be used.

The total content of the compounds represented by formula (II) and formula (III) in the organohydrogensiloxane is preferably 50% by weight or higher, more preferably 80% by weight or higher, and even more preferably substantially 100% by weight.

The content of the organohydrogensiloxane is preferably 0.1 to 99% by weight, more preferably 0.1 to 90% by weight, even more preferably 0.1 to 80% by weight, based on the composition.

With respect to the weight ratio of the alkenyl-containing cage octasilsesquioxane to the organohydrogensiloxane, the molar ratio of the $SiR^1$ group of the alkenyl-containing cage octasilsesquioxane to the SiH groups of the organohydrogensiloxane ($SiR^1$/SiH) is preferably from 1/1 to 0.1/1, more preferably from 1/1 to 0.2/1, even more preferably from 1/1 to 0.5/1, even more preferably substantially equivalent (1/1), from the standpoint of reacting the two kinds of functional groups in a proper proportion.

(3) Hydrosilylation Catalyst

The hydrosilylation catalyst in the invention is not particularly limited so long as the catalyst is a compound which catalyzes the hydrosilylation reaction between the hydrosilyl groups of the organohydrogensiloxane and the alkenyl group of the alkenyl-containing cage octasilsesquioxane. Examples thereof include platinum catalysts such as platinum black, platinum chloride, chloroplatinic acid, platinum/olefin complexes, platinum/carbonyl complexes and platinum/acetylacetate; and palladium catalysts and rhodium catalysts. Preferred of these, from the standpoints of compatibility and catalytic activity, are platinum/carbonyl complexes such as platinum/1,3-divinyl-1,1,3,3-tetramethyldisiloxane complexes. Incidentally, platinum complexes such as platinum/1,3-divinyl-1,1,3,3-tetramethyldisiloxane complexes have high reactivity and, hence, can be added in a limited amount. This enables the metal, which accelerates silicone decomposition, to be added in a reduced amount, and a resin composition having even better heat resistance is obtained.

The content of the hydrosilylation catalyst in the composition, in the case of using, for example, a platinum catalyst, is preferably $1.0\times10^{-4}$ to 10 parts by weight, more preferably $1.0\times10^{-3}$ to 1 part by weight, in terms of platinum content per 100 parts by weight of the organohydrogensiloxane, from the standpoint of reaction rate.

The composition of the invention for thermoplastic silicone resins may contain additives such as an antioxidant, modifier, surfactant, dye, pigment, discoloration inhibitor, ultraviolet absorber, and the like besides the ingredients described above, so long as these additives do not impair the effect of the invention.

The composition of the invention for thermoplastic silicone resins can be prepared without particular limitations so long as the composition includes (1) the alkenyl-containing cage octasilsesquioxane, (2) an organohydrogensiloxane, and (3) a hydrosilylation catalyst. The composition may be one prepared through mixing using an additive added, such as an organic solvent, according to need.

The organic solvent is not particularly limited. However, toluene is preferred from the standpoint of enhancing compatibility between the ingredients.

The amount of the organic solvent to be present is preferably 0.1 to 100 parts by weight, more preferably 1 to 10 parts by weight, per 100 parts by weight of the sum of the alkenyl-containing cage octasilsesquioxane, the organohydrogensiloxane and the hydrosilylation catalyst.

The thermoplastic silicone resin composition of the invention is obtained by polymerizing the composition for thermoplastic silicone resins of the invention.

Specifically, the thermoplastic silicone resin composition may be obtained by stirring and mixing the alkenyl-containing cage octasilsesquioxane, organohydrogensiloxane and hydrosilylation catalyst optionally together with an

organic solvent at a temperature of preferably 0 to 200°C, more preferably 20 to 150°C. Mixing time cannot be unconditionally determined because it varies depending on the reaction temperature and the kinds and amounts of the ingredients to be subjected to the reaction. However, a mixing time of 0.5 to 96 hours is preferred. Methods for mixing are not particularly limited so long as the ingredients are evenly mixed.

The degree of progress of the hydrosilylation reaction can be ascertained through $^1$H-NMR analysis on the basis of the intensity of a signal assigned to the $SiR^1$ group of the alkenyl-containing cage octasilsesquioxane. When the signal has disappeared, the reaction is regarded as completed.

The thermoplastic silicone resin composition thus obtained is solid at ordinary temperature and has a melting point not lower than ordinary temperature. The term "ordinary temperature" in the present specification means 15 to 35°C. The thermoplastic silicone resin composition of the invention has a melting point of preferably 40 to 150°C, more preferably 45 to 100°C. In the present specification, the melting point of a silicone resin composition can be measured by the method described in the Examples which will be given later.

The thermoplastic silicone resin composition of the invention has excellent heat resistance and can hence be used in a wide range of applications such as, for example, materials for forming insulating coating films, weather-resistant coating materials, insulating molding materials, semiconductor encapsulating materials, and additives for silicone resins.

EXAMPLES

The invention will be explained below by reference to Examples and a Comparative Example, but the invention should not be construed as being limited by these Examples and the like in any way.

Viscosity of Silicone Derivative

The viscosity was measured with a rheometer under the conditions of 25°C and 1 atm.

EXAMPLE 1

In 3 mL of toluene were dissolved 0.501 g (0.584 mmol) of cage allylheptaisobutylsilsesquioxane [the compound represented by formula (I) in which $R^1$ is allyl and all $R^2$ groups are isobutyl] and 0.154 g of an organohydrogensiloxane [the compound represented by formula (II) in which all $R^3$ groups are methyl, a=20, and b=9; viscosity, 30 mPa·s] [molar ratio of the $SiR^1$ group of the alkenyl-containing cage octasilsesquioxane to the SiH groups of the organohydrogensiloxne ($SiR^1$/SiH) = 0.93/1]. Thereto was added 0.010 mL of a platinum/1,3-divinyl-1,1,3,3-tetramethyldisiloxane complex (platinum concentration, 2% by weight) as a hydrosilylation catalyst (the content of platinum was 0.13 parts by weight per 100 parts by weight of the organohydrogensiloxane). The ingredients were stirred and mixed at 80°C for 15 hours. Thereafter, the solvent was removed at a reduced pressure and room temperature (25°C) to thereby obtain a thermoplastic silicone resin composition.

EXAMPLE 2

In 3 mL of toluene were dissolved 0.490 g (0.571 mmol) of cage allylheptaisobutylsilsesquioxane [the compound represented by formula (I) in which $R^1$ is allyl and all $R^2$ groups are isobutyl] and 0.082 g of an organohydrogensiloxane [the compound represented by formula (II) in which all $R^3$ groups are methyl, a=10, and b=10; viscosity, 20 mPa·s] [$SiR^1$/SiH (molar ratio) = 0.97/1]. Thereto was added 0.020 mL of a platinum/1,3-divinyl-1,1,3,3-tetramethyldisiloxane complex (platinum concentration, 2% by weight) as a hydrosilylation catalyst (the content of platinum was 0.49 parts by weight per 100 parts by weight of the organohydrogensiloxane). The ingredients were stirred and mixed at 80°C for 16 hours. Thereafter, the solvent was removed at a reduced pressure and room temperature (25°C) to thereby obtain a thermoplastic silicone resin composition.

EXAMPLE 3

In 3 mL of toluene were dissolved 0.300 g (0.359 mmol) of cage vinylheptaisobutylsilsesquioxane [the compound represented by formula (I) in which $R^1$ is vinyl and all $R^2$ groups are isobutyl] and 0.123 g of an organohydrogensiloxane [the compound represented by formula (II) in which all $R^3$ groups are methyl, a=20, and b=9; viscosity, 30 mPa·s] [$SiR^1$/SiH (molar ratio) = 0.72/1]. Thereto was added 0.008 mL of a platinum/1,3-divinyl-1,1,3,3-tetramethyldisiloxane complex (platinum concentration, 2% by weight) as a hydrosilylation catalyst (the content of platinum was 0.13 parts by weight per 100 parts by weight of the organohydrogensiloxane). The ingredients were stirred and mixed at 25°C for 48 hours. Thereafter, the solvent was removed at a reduced pressure and room temperature (25°C) to thereby obtain a thermoplastic silicone resin composition.

EXAMPLE 4

In 3 mL of toluene were dissolved 0.380 g (0.370 mmol) of cage vinylheptacyclohexylsilsesquioxane [the compound represented by formula (I) in which $R^1$ is vinyl and all $R^2$ groups are cyclohexyl] and 0.132 g of an organohydrogensiloxane [the compound represented by formula (II) in which all $R^3$ groups are methyl, a=20, and b=9; viscosity, 30 mPa·s] [$SiR^1$/SiH (molar ratio) = 0.68/1]. Thereto was added 0.008 mL of a platinum/1,3-divinyl-1,1,3,3-tetramethyldisiloxane complex (platinum concentration, 2% by weight) as a hydrosilylation catalyst (the content of platinum was 0.12 parts by weight per 100 parts by weight of the organohydrogensiloxane). The ingredients were stirred and mixed at 25°C for 48 hours. Thereafter, the solvent was removed at a reduced pressure and room temperature (25°C) to thereby obtain a thermoplastic silicone resin composition.

COMPARATIVE EXAMPLE 1

In 3 mL of toluene were dissolved 0.475 g (0.584 mmol) of the cage divinylhexaisobutylsilsesquioxane represented by formula (IV):

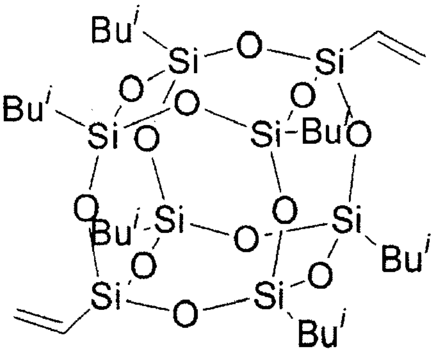

(IV)

and 0.077 g of an organohydrogensiloxane [the compound represented by formula (II) in which all $R^3$ groups are methyl, a=20, and b=9; viscosity, 30 mPa·s] [molar ratio of the vinyl groups of the cage divinylhexaisobutylsilsesquioxane to the SiH groups of the organohydrogensiloxne (vinyl/SiH) = 0.93/1]. Thereto was added 0.010 mL of a platinum/1,3-divinyl-1,1,3,3-tetramethyldisiloxane complex (platinum concentration, 2% by weight) as a hydrosilylation catalyst (the content of platinum was 0.13 parts by weight per 100 parts by weight of the organohydrogensiloxane). The ingredients were stirred and mixed at 25°C for 48 hours. Thereafter, the solvent was removed at a reduced pressure and room temperature (25°C) to thereby obtain a silicone resin composition.

The compositions described above were used to prepare optical semiconductor devices.

Optical-Semiconductor-Device Production Example 1

Each of the compositions of Examples 1 to 4 was dropped, in a molten state, onto a substrate having a blue LED mounted thereon, and was then cooled to thereby solidify the resin. Thus, optical semiconductor devices were produced. On the other hand, the composition of Comparative Example 1 did not melt and, hence, an optical semiconductor device was unable to be produced therewith.

The compositions and optical semiconductor devices obtained were evaluated for properties according to the following Test Examples 1 to 4. The results thereof are shown in Table 1.

Test Example 1 (Liquefaction Temperature)

A sample was heated on a hot plate and visually examined for the temperature at which the sample completely liquefied.

Test Example 2 (Melting Point)

A differential scanning calorimeter (DSC) (EXSTAR 6000, manufactured by Seiko Instruments Ltd.) was used to heat a sample at a heating rate of 10 °C/min to measure the melting point in the heating.

Test Example 3 (Thermal Discoloration Resistance and Thermal Decomposition Resistance)

A sample was allowed to stand still in a 200°C hot-air drying oven and visually examined for appearance after 168 hours had passed. The samples which showed no discoloration through the storage are indicated by "good", and any sample which discolored through the storage is indicated by "poor". The samples were further visually examined for appearance at 25°C before the storage, and the results thereof are also shown. Furthermore, the weight of each sample was measured before the storage and after the lapse of the 168 hours, and a weight retention (%) was calculated, while taking the weight measured before the storage as 100%. The less the appearance change through the storage and the higher the weight retention, the better the heat resistance.

Test Example 4 (Light Resistance)

A current of 200 mA was caused to flow through each optical semiconductor device to bring the LED element into an ON state, and the luminance thereof was measured immediately after the test initiation with an instantaneous multiple photometric system (MCPD-3000, manufactured by Otsuka Electronics Co., Ltd.). Thereafter, the LED element was allowed to stand in the ON state and, after the lapse of 300 hours, the luminance thereof was measured in the same manner. A luminance retention was calculated using the following equation to evaluate light resistance. The higher the luminance retention, the better the light resistance.

$$\text{Luminance retention (\%)} = [(\text{luminance after lapse of 300 hours})/(\text{luminance immediately after test initiation})] \times 100$$

Table 1

| | | Example 1 | Example 2 | Example 3 | Example 4 | Comp. Ex. 1 |
|---|---|---|---|---|---|---|
| Composition | (1) Alkenyl-containing cage octasilsesquioxane | cage allylheptaisobutyl-silsesquioxane | cage allylheptaisobutyl-silsesquioxane | cage vinylheptaisobutyl-silsesquioxane | cage vinylheptacyclo-hexylsilsesquioxane | cage divinylhexaisobutyl-silsesquioxane |
| | (2) Organohydrogen siloxane | compound of formula (II) in which all $R^3$s are methyl, a=20, and b=9 | compound of formula (II) in which all $R^3$s are methyl, a=10, and b=10 | compound of formula (II) in which all $R^3$s are methyl, a=20, and b=9 | compound of formula (II) in which all $R^3$s are methyl, a=20, and b=9 | compound of formula (II) in which all $R^3$s are methyl, a=20, and b=9 |
| | (3) Hydrosilylation catalyst | Pt/DVS complex | Pt/DVS complex | Pt/DVS complex | Pt/DVS complex | Pt/DVS complex |
| | Alkenyl/SiH[1)] | 0.93/1 | 0.97/1 | 0.72/1 | 0.68/1 | 0.93/1 |
| | Platinum content[2)] | 0.13 | 0.49 | 0.13 | 0.12 | 0.13 |
| Property | Liquefaction Temperature (°C) | 60 | 50 | 47 | 47 | none |
| | Melting point (°C) | 59 | 47 | 45 | 45 | none |
| | Appearance at 25°C | brown solid | brown solid | colorless solid | colorless solid | colorless solid |
| | Thermal discoloration resistance | good | good | good | good | good |
| | Thermal decomposition resistance (weight retention, %) | 97.3 | 95.6 | 96.5 | 97.0 | 95.5 |
| | Light resistance (luminance retention, %) | 99 | 100 | 100 | 99 | - |

Pt/DVS complex: platinum/1,3-divinyl-1,1,3,3-tetramethyldisiloxane complex

1): Molar ratio of alkenyl group of the alkenyl-containing cage octasilsesquioxane to SiH groups of the organohydrogensiloxane (alkenyl/SiH).

2): Amount (parts by weight) used per 100 parts by weight of the organohydrogensiloxane.

It can be seen from Table 1 that the compositions of the Examples are solid at 25°C but have a melting point higher than ordinary temperature and that these compositions further have excellent heat resistance. On the other hand, the composition of the Comparative Example was not meltable and had no melting point although the composition had excellent heat resistance.

While the invention has been described in detail with reference to specific embodiments thereof, it will be apparent to one skilled in the art that various changes and modifications can be made therein without departing from

the spirit and scope thereof.
Incidentally, the present application is based on Japanese Patent Application No. 2009-256116 filed on November 9, 2009, and the contents are incorporated herein by reference.
Also, all the references cited herein are incorporated as a whole.

The composition of the invention for thermoplastic silicone resins is suitable for use in, for example, materials for forming insulating coating films, weather-resistant coating materials, insulating molding materials, semiconductor encapsulating materials, and additives for silicone resins.

## Claims

1. A composition for a thermoplastic silicone resin, said composition comprising:

   an alkenyl-containing cage octasilsesquioxane represented by formula (I):

   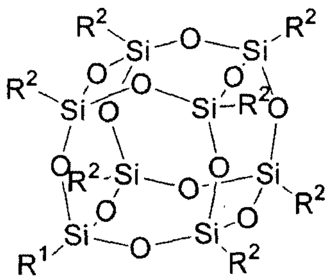

   (I)

   in which $R^1$ represents a substituted or unsubstituted alkenyl group, $R^2$ represents a monovalent hydrocarbon group, and all $R^2$ groups may be the same or different;
   an organohydrogensiloxane; and
   a hydrosilylation catalyst.

2. The composition according to claim 1, wherein the organohydrogensiloxane comprises at least one compound selected from the group consisting of compounds represented by formula (II):

   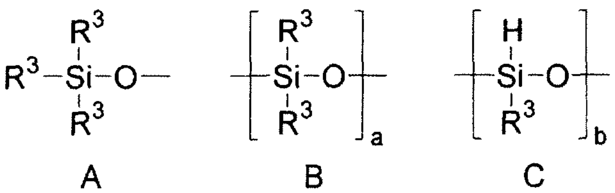

   (II)

   in which A, B, and C are constitutional units, A represents a terminal unit, B and C each represent a repeating unit, $R^3$ represents a monovalent hydrocarbon group, a represents an integer of 0 or larger, b represents an integer of 2 or larger, and all $R^3$ groups may be the same or different
   and compounds represented by formula (III):

   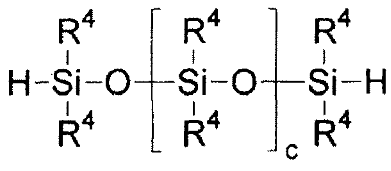

   (III)

in which $R^4$ represents a monovalent hydrocarbon group, c represents an integer of 0 or larger, and all $R^4$ groups may be the same or different.

**3.** A thermoplastic silicone resin composition obtained by reacting:

an alkenyl-containing cage octasilsesquioxane represented by formula (I):

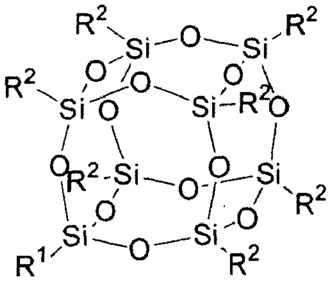

(I)

in which $R^1$ represents a substituted or unsubstituted alkenyl group, $R^2$ represents a monovalent hydrocarbon group, and all $R^2$ groups may be the same or different,
with an organohydrogensiloxane in the presence of a hydrosilylation catalyst.

Europäisches Patentamt
European Patent Office
Office européen des brevets

# EUROPEAN SEARCH REPORT

Application Number
EP 10 19 0410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/054047 A1 (LAI YU-CHIN [US] ET AL LAI YU-CHIN [US] ET AL) 18 March 2004 (2004-03-18) * paragraphs [0008] - [0009]; example 5 * * paragraph [0036]; claim 2 * ----- | 1-3 | INV. C08L83/04 |
| A | US 2006/074213 A1 (KIYOMORI AYUMU [JP] ET AL) 6 April 2006 (2006-04-06) * paragraphs [0004] - [0005] * ----- | 1-3 | |
| A | US 5 047 492 A (WEIDNER RICHARD [DE] ET AL) 10 September 1991 (1991-09-10) * examples 14,3 * ----- | 1-3 | |
| | | | TECHNICAL FIELDS SEARCHED (IPC) |
| | | | C08L |

The present search report has been drawn up for all claims

1

| Place of search | Date of completion of the search | Examiner |
|---|---|---|
| The Hague | 17 January 2011 | Dalet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
……………………………………………………………
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 19 0410

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2011

| Patent document cited in search report | Publication date | Patent family member(s) | Publication date |
|---|---|---|---|
| US 2004054047 A1 | 18-03-2004 | AU 2003270078 A1 | 30-04-2004 |
| | | CA 2496274 A1 | 25-03-2004 |
| | | CN 1681456 A | 12-10-2005 |
| | | EP 1536744 A1 | 08-06-2005 |
| | | JP 2005538770 T | 22-12-2005 |
| | | KR 20050046765 A | 18-05-2005 |
| | | WO 2004024042 A1 | 25-03-2004 |
| US 2006074213 A1 | 06-04-2006 | EP 1645560 A1 | 12-04-2006 |
| | | JP 2006104325 A | 20-04-2006 |
| US 5047492 A | 10-09-1991 | DE 3837397 A1 | 10-05-1990 |
| | | EP 0367222 A2 | 09-05-1990 |
| | | JP 1829941 C | 15-03-1994 |
| | | JP 2178291 A | 11-07-1990 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2000154252 A
- JP 2002069191 A
- JP 2009256116 A

### Non-patent literature cited in the description

- **J.J. Schwab et al.** *Applied Organometallic Chemistry,* 1999, vol. 13, 311-327